# EUROPÄISCHE PATENTSCHRIFT

(11) **EP 0 595 759 B1**
(45) Veröffentlichungstag und Bekanntmachung des Hinweises auf die Patenterteilung: **19.05.1999**
(21) Anmeldenummer: 93710016.2
(22) Anmeldetag: 07.09.1993
(51) Int. Cl.: G01N 1/28, B04B 5/04

(54) **Zentrifugationskammer mit lösbarer Spannplatte**
Centrifugation chamber with releasable fixing plate
Chambre de centrifugation avec un support plat amovible

(30) Priorität: 27.10.1992 DE 9214534 U
(43) Veröffentlichungstag der Anmeldung: 04.05.1994
(73) Patentinhaber: Firma Andreas Hettich, D-78532 Tuttlingen (DE)
(72) Erfinder: Eberle, Günter, D-78532 Tuttlingen (DE)
(74) Vertreter: Riebling, Peter, Dr.-Ing.

(56) Entgegenhaltungen:
- EP-A- 0 126 429
- EP-A- 0 205 108
- DE-U- 9 104 438
- DE-U- 9 107 153
- FR-A- 2 590 023
- PATENT ABSTRACTS OF JAPAN vol. 011, no. 072 (P-554)5. März 1987 & JP-A-61 234 337 (CHIYODA SEISAKUSHO:KK) 18. Oktober 1986

## Beschreibung

Die Erfindung betrifft eine Zentrifugationskammer mit lösbarer Spannplatte nach dem Oberbegriff des Patentanspruchs 1. Eine derartige Zentrifugationskammer ist aus EP-A-0 126 429 bekannt.

Eine weitere Zentrifugationskammer ist mit dem auf den gleichen Anmelder zurückgehenden DE 91 04 438 U1 bekannt geworden. Auf die dortige Offenbarung wird Bezug genommen; diese Offenbarung soll vollinhaltlich von der vorliegenden Offenbarung umfasst sein.

Die bekannte Zentrifugationskammer verwendet etwa ein senkrecht zur Spannplatte aufgeschraubtes Oberteil, das ein Rohrstück aufweist, welches eine nach oben weisende Befüllungsöffnung definiert. Die Längsachse des Rohrstückes ist rechtwinklig zur Ebene der Spannplatte ausgerichtet. Wird die bekannte Zentrifugationskammer in senkrechter Einbaulage, d.h. so in ein ausschwingendes Gehäuse, eingesetzt, daß die Längsachse des Rohrstückes etwa horizontal liegt, dann bestehen Schwierigkeiten, die Probenflüssigkeit in die Befüllungsöffnung der Zentrifugationskammer einzufüllen.

Im übrigen war es mit der bekannten Zentrifugationskammer nicht möglich, verschiedene Zentrifugationsverfahren durchzuführen, nämlich eine Feuchtzentrifugation und wahlweise eine Trockenzentrifugation.

Zur Durchführung einer feuchten Zentrifugation war eine andere Zentrifugationskammer des Anmelders bekannt (DE 91 07 153 U1), auf deren Offenbarung ebenfalls Bezug genommen wird und deren Offenbarung vollinhaltlich von der vorliegenden Offenbarung umfasst sein soll.

Der Erfindung liegt deshalb die Aufgabe zugrunde, die Befüllung einer Zentrifugationskammer mit einer Probenflüssigkeit zu erleichtern und im übrigen zwei verschiedene Zentrifugationsverfahren in einfacher Weise durchführen zu können.

Zur Lösung der gestellten Aufgabe ist die Erfindung durch die technische Lehre des Anspruchs 1 gekennzeichnet.

Das die Zentrifugationskammer ausbildende Rohrstück ist als Winkelrohr (Winkelkammer) ausgebildet.

Die Winkelkammer bietet den Vorteil, daß sie sowohl üblicherweise in ausschwingendem Gehänge in Ruhestellung waagrecht eingesetzt werden kann, als auch in starrem, senkrechten Zustand, wobei beide Male die Öffnung schräg nach oben zeigt.

Im starren, senkrechten Zustand wird nur so viel Flüssigkeit eingefüllt, daß es sich unterhalb der senkrechten abgedeckten Sedimentationsfläche befindet. Die zellenhaltige Flüssigkeit wird durch Zentrifugalkraft auf die abgedichtete Objektträgerfläche geschleudert, wo die Zellen haften bleiben, während die zellfrei gewordene Flüssigkeit zurückläuft in die bauchige Vertiefung der Kammer. So kann die Kammer leicht ausgekippt werden, anschließend der Objektträger feucht fixiert werden, oder aber durch leichtes Lösen des Spannrings die Dichtung gelockert werden, wodurch die Restfeuchtigkeit in eine Filterkarte beim nochmaligen kurzen Anzentrifugieren abfließt, die die gleiche Größe des Objektträgers und in der Mitte eine größere Öffnung als die Winkelkammer besitzt.

Wesentliches Merkmal der Erfindung ist, daß durch unterschiedliches Anziehen des Spannrings verschiedene Zytoverfahren durchgeführt werden können, nämlich die Feuchtzentrifugation und die Trockenzentrifugation, d.h. man kann ohne eingelegte Filterkarten die Feuchtzentrifugation bewerkstelligen und mit eingelegter Filterkarte die Trockenzentrifugation durch Lockern des Spannrings und leichter Leckage der Dichtung, wodurch die Flüssigkeit durch die Filterkarte aufgesaugt werden kann.

Die Erfindungsaufgabe wird also bereits schon durch Ausbildung des Rohrstückes als Winkelrohr gelöst, wobei der geltende Anspruch 1 Ausführungen umfasst, bei denen das Winkelrohr ein Knie unterhalb der Unterkante der Bohrung der Kammer ausbildet oder ohne ein entsprechendes Knie (Auffangkammer) auskommt.

Durch die technische Lehre des Anspruchs 1 wird eine leichte Befüllbarkeit der Zentrifugationskammer in allen Einbaulagen im Schleuderkopf gewährleistet.

Mit der technischen Lehre des Anspruchs 1 wird zusätzlich die Möglichkeit geboten, wahlweise eine Trocken- oder Feuchtzentrifugation durchzuführen.

Die Verwendung eines drehbaren Spannringes nach dem Anspruch 1 in Verbindung mit dem Merkmal, daß das Oberteil gegen Verdrehung gesichert auf der Spannplatte gehalten ist, bietet den weiteren Vorteil, daß das Oberteil nun nicht mehr in Bezug zum Unterteil (Spannplatte) gedreht werden muß, und somit nicht mehr die Gefahr besteht, daß bei der Verdrehung der zwischen beiden Teilen eingespannte Probenträger (das ist in der Regel ein dünnes Deckglas) beschädigt wird oder gar die darauf anhaftende Zell-Sedimentation.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von mehrere Ausführungswege darstellenden Zeichnungen näher erläutert. Hierbei gehen aus den Zeichnungen und ihrer Beschreibung weitere wesentliche Merkmale und Vorteile der Erfindung hervor.

Es zeigen:

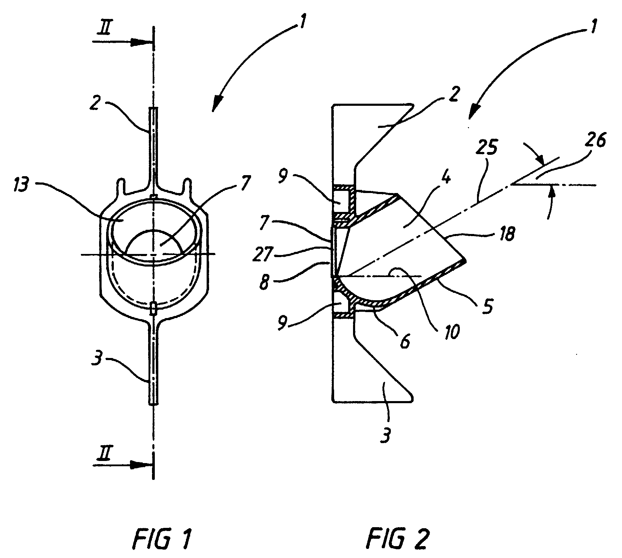

- Figur 1:: das Oberteil der Zentrifugationskammer in der Vorderansicht,
- Figur 2:: Schnitt gemäss der Linie II-II in Figur 1,
- Figur 3:: einen Schnitt durch die Zentrifugationskammer, bestehend aus Oberteil, Spannplatte und Spannring,
- Figur 4:: Schnitt durch die Spannplatte in Richtung der Linie IV-IV in Figur 6,
- Figur 5:: Schnitt gemäss der Linie V-V in Figur 4,
- Figur 6:: Draufsicht auf die Spannplatte,
- Figur 7:: Seitenansicht der Spannplatte in Richtung des Pfeiles VII in Figur 6,
- Figur 8:: den Spannring gemäss einem Schnitt der Linie VIII-VIII in Figur 10,
- Figur 9:: die Seitenansicht des Spannringes,
- Figur 10:: die Draufsicht auf den Spannring.

Das Oberteil 1 der Zentrifugationskammer besteht im wesentlichen aus einem werkstoffeinstückig gespritzten Kunststoffteil, welches zwei einander gegenüberliegende Flansche 2, 3 aufweist, zwischen denen ringförmige Rippen 9 angeordnet sind, die in ihrer Mitte die als Winkelrohr 5 ausgebildete Kammer 4 tragen.

Die Längsachse 25 der Kammer 4 bildet somit einen Winkel 26 zur Horizontalen.

Im gezeigten Ausführungsbeispiel bildet das Winkelrohr 5 ein Knie 6, welches unterhalb der Unterkante 10 der Bohrung 7 verläuft.

An der Umfassung der Bohrung 7 ist werkstoffeinstückig eine Dichtlippe 27 angespritzt. Die durch die Dichtlippe 27 definierte Stirnfläche 8 bildet die Auflagefläche für einen darunter (dahinter) liegenden Probenträger, insbesondere ein dünnes Deckglas.

Das Unterteil 11 der Zentrifugationskammer besteht im wesentlichen aus der Spannplatte 14 und dem dazugehörenden Spannring 19.

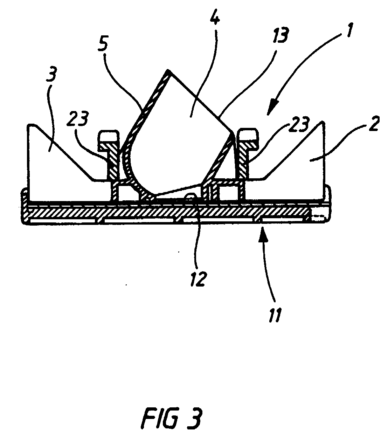

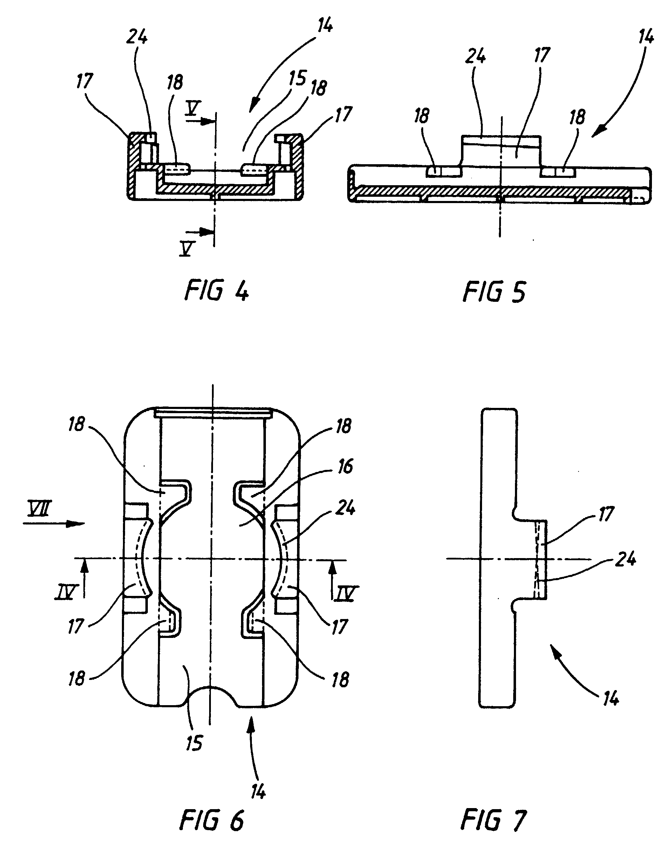

Gemäss den Figuren 4 - 7 besteht die Spannplatte 14 aus einem werkstoffeinstückigen Kunststoff-Spritzgußteil, welches im Bereich einer Grundfläche eine Nut 15 definiert. Symmetrisch einander gegenüberliegend sind Flansch 17 vorgesehen, die eine runde Öffnung in Verbindung mit Ansätzen 18 definieren, in deren Bereich ein Gewinde 24 eingearbeitet ist.
Auf die dadurch gebildete runde Fläche 16 wird das Oberteil 1 aufgesetzt, so daß die Stirnfläche 8 auf der Fläche 16 zu liegen kommt. Auf dieser Fläche wird gemäss Figur 3 ein Deckglas 12 oder ein anderer Probenträger aufgelegt und von der umlaufenden Dichtlippe 27 des Oberteils 1 abgedichtet.

Das Oberteil 1 wird nun an den Flanschen 2,3 erfasst und auf die Spannplatte 14 gesetzt, wobei sich die in Figur 3 gezeigte Zuordnung ergibt.

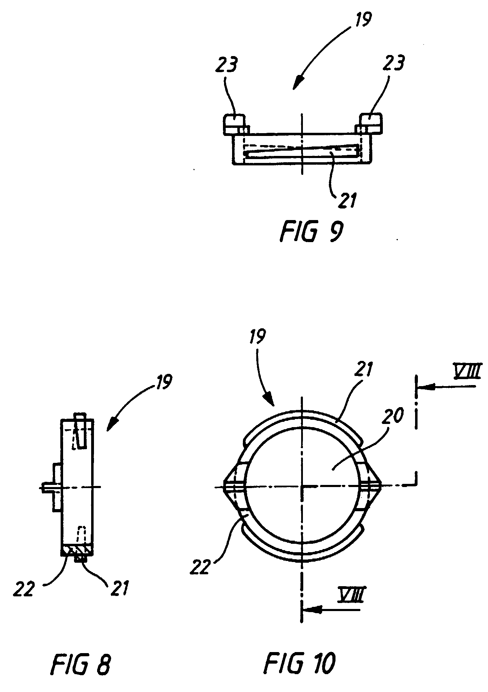

Es wird nun ein Spannring 19 gemäss den Figuren 8 bis 10 verwendet, um das Oberteil 1 ohne Verdrehung in Bezug zur Spannplatte 14 mit Hilfe des Spannringes 19 auf der Spannplatte 14 festzuziehen. Hierbei weist der Spannring 19 eine mittlere zentrale Bohrung 20 auf, durch welche die als Winkelrohr 5 ausgebildete Kammer 4 des Oberteils 1 hindurchgreift.
Mit dem am Aussenumfang angeordneten Gewinde 21 greift der Spannring 19 in das zugeordnete Gewinde 24 der Spannplatte 14 ein. Am Spannring sind noch Handhaben 23 angeordnet, mit denen dieser leicht verdreht werden kann. Im wesentlichen ist der Spannring 19 als Ringflansch 22 ausgebildet.

## Patentansprüche

1. Zentrifugationskammer mit lösbarer Spannplatte, bestehend aus einem Oberteil (1) mit einer die Probenflüssigkeit enthaltenden Kammer (4), die als Rohrstück ausgebildet ist und zur einen Seite eine Befüllungsöffnung (13) für das Einfüllen der Probenflüssigkeit sowie zur anderen Seite eine Bohrung (7) aufweist, wobei das Oberteil (1) mit einer Spannplatte (14) lösbar verbunden ist und zwischen der Bohrung des Oberteils und der Spannplatte ein Probenträger angeordnet ist, wobei das im Oberteil (1) angeordnete, die Kammer (4) bildende Rohrstock als Winkelrohr (5) ausgebildet ist, dessen Längsachse (25) einen Winkel (26) zur Horizontalen bildet, dadurch gekennzeichnet, daß das Oberteil (1) mittels eines drehbaren Spannrings (19) auf die den Probenträger tragende Spannplatte (1) aufgespannt ist.

2. Zentrifugationskammer nach Anspruch 1, **dadurch gekennzeichnet**, daß das Winkelrohr (5) mit seiner Unterkante, bzw. untere Bodenfläche, unterhalb der Unterkante (10) der Bohrung der Kammer (4) angeordnet ist und dort ein Knie als Aufnahmeraum für die Probenflüssigkeit bildet.

3. Zentrifugationskammer nach einem der Ansprüche 1 und 2, **dadurch gekennzeichnet**, daß das Oberteil (1) gegen Verdrehung gesichert auf der Spannplatte (14) gehalten ist.

4. Zentrifugationskammer nach einem der Ansprüche 1 - 3, **dadurch gekennzeichnet**, daß die Zentrifugationskammer (1,19) waagerecht in ein ausschwingendes Gehänge eingesetzt ist, so daß die Spannplatte (14) horizontal ausgerichtet ist.

5. Zentrifugationskammer nach einem der Ansprüche 1 - 4, **dadurch gekennzeichnet**, daß die Zentrifugen (1,19) senkrecht in ein nicht-ausschwingendes Gehänge eingesetzt sind, so daß die Spannplatte (14) senkrecht ausgerichtet ist.

## Claims

1. A centrifugation chamber with a releasable clamping plate, consisting of an upper part (1) with a chamber (4) containing the sample fluid, which chamber (4) is constructed as a pipe piece and on one side has a filling opening (13) for filling the sample fluid and on the other side has a bore (7), the upper part (1) being releasably connected with a clamping plate (14) and a sample carrier being arranged between the bore of the upper part and the clamping plate, the pipe piece which is arranged in the upper part (1) and forms the chamber (4) being constructed as an angular pipe (5), the longitudinal axis (25) of which forms an angle (26) to the horizontal, characterised in that the upper part (1) is clamped by means of a rotatable clamping ring (19) onto the clamping plate (1) bearing the sample carrier.

2. The centrifugation chamber according to Claim 1, characterised in that the angular pipe (5) is arranged with its lower edge or respectively lower base surface beneath the lower edge (10) of the bore of the chamber (4) and forms a knee bend there as receiving space for the sample fluid.

3. The centrifugation chamber according to one of Claims 1 and 2, characterised in that the upper part (1) is held so as to be secure against rotation on the clamping plate (14).

4. The centrifugation chamber according to any one of Claims 1 - 3, characterised in that the centrifugation chamber (1, 19) is inserted horizontally into a swing-out suspension arrangement, so that the clamping plate (14) is aligned horizontally.

5. The centrifugation chamber according to any one of Claims 1 - 4, characterised in that the centrifuges (1, 19) are inserted perpendicularly into a non-swing-out suspension arrangement, so that the clamping plate (14) is aligned perpendicularly.

## Revendications

1. Chambre de centrifugation à plaque de serrage amovible, formée d'une partie supérieure (1) pourvue d'une chambre (4) contenant le liquide échantillon, laquelle chambre (4) est conçue comme une pièce tubulaire et comporte d'un côté une ouverture de remplissage (13) pour le déversement du liquide échantillon, et de l'autre côté un perçage (7), étant précisé que la partie supérieure (1) est reliée de façon amovible à une plaque de serrage (14) et qu'un support d'échantillon est disposé entre le perçage de la partie supérieure et la plaque de serrage, et étant précisé que la pièce tubulaire disposée dans la partie supérieure (1) et formant la chambre (4) est conçue comme un tube coudé (5) dont l'axe longitudinal (25) définit un angle (26) par rapport à l'horizontale, caractérisée en ce que la partie supérieure (1) est fixée à l'aide d'une bague de serrage rotative (19) sur la plaque de serrage (14) qui porte le support d'échantillon.

2. Chambre de centrifugation selon la revendication 1, caractérisée en ce que le tube coudé (5) est disposé avec son bord inférieur ou sa surface de fond inférieure au-dessous du bord inférieur (10) du perçage de la chambre (4) et forme à cet endroit un coude comme espace de réception pour le liquide échantillon.

3. Chambre de centrifugation selon la revendication 1 ou 2, caractérisée en ce que la partie supérieure (1) est fixée sur la plaque de serrage (14) en étant immobilisée à l'encontre d'une rotation.

4. Chambre de centrifugation selon l'une des revendications 1 à 3, caractérisée en ce que la chambre de centrifugation (1, 19) est placée à l'horizontale dans une suspension pivotante, de sorte que la plaque de serrage (14) est horizontale.

5. Chambre de centrifugation selon l'une des revendications 1 à 4, caractérisée en ce que les centrifugeuses (1, 19) sont placées à la verticale dans une suspension non pivotante, de sorte que la plaque de serrage (14) est verticale.
